# EUROPEAN PATENT APPLICATION

(11) **EP 3 792 730 A1**
(43) Date of publication of application: **17.03.2021**
(21) Application number: 20195658.8
(22) Date of filing: 11.09.2020
(51) Int. Cl.: G06F 1/16

(54) **DOCK FOR A PORTABLE ELECTRONIC DEVICE**

(30) Priority: 13.09.2019 US 201962900331 P
(71) Applicant: ACCO Brands Corporation, Lake Zurich, IL 60047-8997 (US)
(72) Inventor: HUANG, Yu-Chia, New Taipei City (TW); HUNG, Chia-Cheng, Taoyuan City 330 (TW); CAMPBELL, Erik, Redwood City, CA 94062 (US)
(74) Representative: Forresters IP LLP

(57) **Abstract**

A dock for a portable electronic device includes a base, a cradle coupled to the base and defining an interior volume configured to receive the portable electronic device, and a security apparatus. The security apparatus is configured to move between a first position where the security apparatus is configured to couple to the portable electronic device, and a second position where the security apparatus is configured to disengage the portable electronic device. The dock includes a detect mechanism coupled to the security apparatus for movement relative to the cradle. The detect mechanism is configured to block insertion of the portable electronic device into the cradle when the security apparatus is in the first position.

## Description

### CROSS REFERENCE TO RELATED APPLICATIONS

This application claims priority to U.S. Provisional Patent Application No. 62/900,331, filed on September 13, 2019, the entire contents of which are incorporated herein by reference.

### FIELD OF THE INVENTION

The present invention relates to docking stations for portable electronic devices.

### SUMMARY

In one aspect, the invention provides a dock for a portable electronic device including a base, a cradle coupled to the base and defining an interior volume configured to receive the portable electronic device, a security apparatus configured to move between a first position where the security apparatus is configured to couple to the portable electronic device, and a second position where the security apparatus is configured to disengage the portable electronic device, and a detect mechanism coupled to the security apparatus for movement relative to the cradle, the detect mechanism configured to block insertion of the portable electronic device into the cradle when the security apparatus is in the first position.

In another aspect, the invention provides a dock for a portable electronic device including a base, a cradle coupled to the base and defining an interior volume configured to receive the portable electronic device, and a pad positioned within the cradle, wherein the pad includes one or more protrusions extending therefrom, the one or more protrusions configured to selectively deflect into the pad for portable electronic devices of different thicknesses.

In yet another aspect, the invention provides a dock for a portable electronic device including a base, a cradle rotatably coupled to the base and defining an interior volume configured to receive the portable electronic device, a pad coupled to the cradle and including a plurality of protrusions extending therefrom, the plurality of protrusions configured to deflect into the pad for portable electronic devices of different thicknesses, a security apparatus configured to move between a first position where the security apparatus is configured to electrically couple to the portable electronic device, and a second position where the security apparatus is configured to disengage the portable electronic device, and a detect mechanism coupled to the security apparatus for movement relative to the cradle, the detect mechanism configured to extend through the pad to block insertion of the portable electronic device into the cradle when the security apparatus is in the first position.

Other aspects of the invention will become apparent by consideration of the detailed description and accompanying drawings.

### BRIEF DESCRIPTION OF THE DRAWINGS

Fig. 1 is a front perspective view of a system including a dock operable to hold a portable electronic device.
Fig. 2 is a rear perspective view of the dock shown in Fig. 1.
Fig. 3 is a front view of the dock shown in Fig. 1.
Fig. 4 is a side view of the dock shown in Fig. 1 in a first position.
Fig. 5A is a side view of the system shown in Fig. 1 moving from the first position to a second position and including a portable electronic device.
Fig. 5B is a side view of the system of Fig. 1 in the second position and including the portable electronic device.
Fig. 6 is an enlarged end view of a cradle of the dock of Fig. 1 including the portable electronic device without an external screen.
Fig. 7 is another enlarged side view of the cradle of the dock of Fig. 1 including the portable electronic device with an external screen.
Fig. 8 is a partially deconstructed perspective view of a portion of the base of the dock, illustrating a locking mechanism.
Fig. 9 is another partially deconstructed perspective view of a portion of the base of the dock, illustrating the locking mechanism.
Fig. 10 is a partially deconstructed perspective view of a portion of the base of the dock, illustrating a detect mechanism in a first position.
Fig. 11 is a partially deconstructed perspective view of a portion of the base of the dock, illustrating the detect mechanism in a second position.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

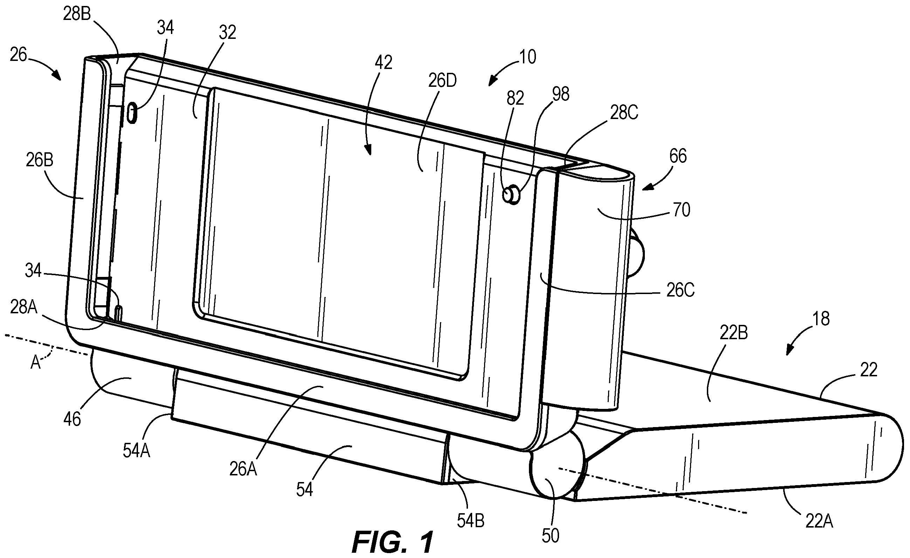

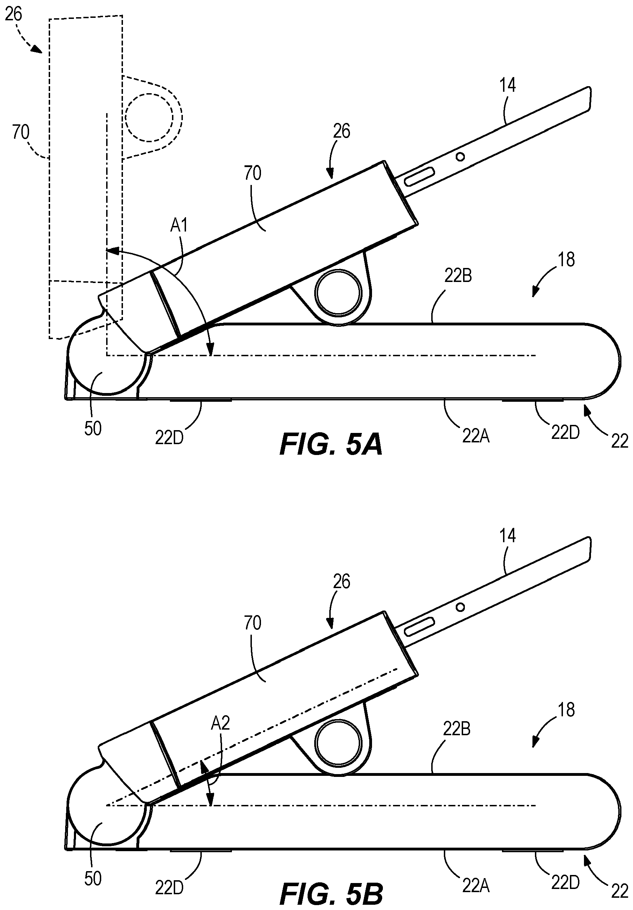

Figs. 1-5 illustrate a system 10 including a portable electronic device 14 (Fig. 5) and a dock 18. The illustrated portable electronic device 14 is a tablet computer. In other embodiments, the portable electronic device 14 may be another type of device, such as a smartphone, an eReader, an MP3 player, and the like.

The dock 18 receives the portable electronic device 14 to secure the device 14 and to support the portable electronic device 14 in a plurality of positions for presentation, operation, and/or storage. In the illustrated embodiment, the dock 18 includes a base 22 and a cradle 26. The cradle 26 is movable relative to the base 22. In the illustrated embodiment, the cradle 26 is rotatable relative to the base 22.

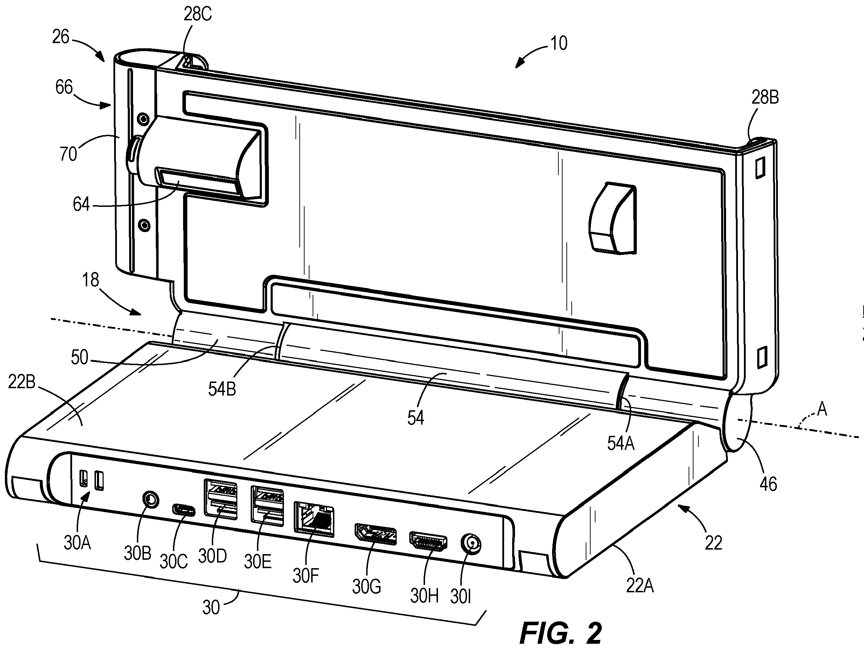

As shown in Figs. 2-4, the base 22 includes a flat lower surface 22A adjacent to or contacting a work surface, such as a desk. The lower surface 22A may be provided with feet 22D or an anti-skid material to limit inadvertent movement of the dock 18 relative to the work surface. An upper surface 22B of the base 22 is opposite the lower surface 22A. A rear surface 22C of the base 22 extends between the lower and upper surfaces 22A, 22B. The rear surface 22C supports and presents a plurality of ports 30.

As shown in Fig. 2, a dual-port lock-slot 30A is provided on the base 22. A security apparatus (not shown) may be inserted into the lock-slot 30A for fixing the dock 18 to an immovable object to inhibit theft of the dock 18 and/or the portable electronic device 14 positioned in the dock 18. In some embodiments, the security apparatus may be, for example, a laptop lock having a security cable, such as the MicroSaver® or ClickSafe® laptop locks sold by Kensington®. The remainder of the ports 30B-30I provide attachment points for peripheral electrical devices for interfacing with the portable electronic device 14 via an electrical connector. For example, a power port 301 and/or a power and data transmission port 30C (e.g., USB C port, USB C 3.1 port, etc.) are provided for charging the portable electronic device 14. Further ports 30D-30I (e.g., USB ports 30D, 30E, Ethernet port 30F, HDMI port 30G, Display Port 30H, and Audio In/Out port 30B) and additional slots (e.g., SD card slot; not shown) provide the ability to connect the portable electronic device 14 to peripherals such as SD cards, monitors, projectors, keyboards, a computer mouse and other pointer devices, routers, and audio devices such as speakers. The base 22 may support internal electrical components such as a wireless transceiver and an internal storage device.

The cradle 26 is sized to accept the portable electronic device 14 in a specific orientation. Specifically, the cradle 26 is sized to accept the electronic device 14 in a landscape orientation. Alternatively, the cradle 26 may be sized to accept the electronic device 14 in a portrait orientation, or may otherwise be expandable, scalable, or non-rigid (e.g., having some elasticity) to accept the electronic device 14 in either orientation.

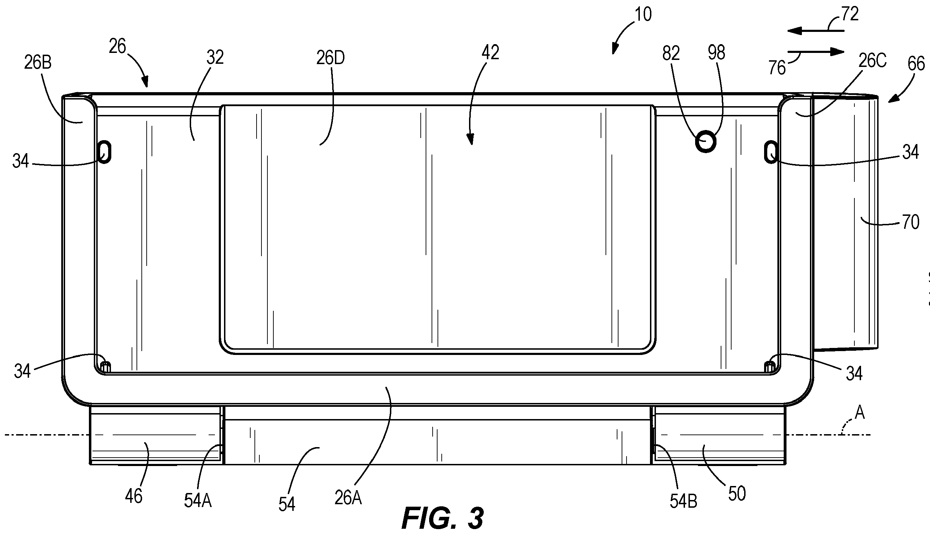

As shown in Figs. 1 and 3, the cradle 26 includes a lower section 26A defining a lower channel 28A for supporting and surrounding a lower side or edge of the portable electronic device 14. The cradle 26 further includes first and second side sections 26B, 26C extending parallel to one another from the lower section 26A. The first and second side sections 26B, 26C further define side channels 28B, 28C in facing relation to one another. In the illustrated embodiment, the channels 28A, 28B, 28C are U-shaped channels having three sides oriented 90 degrees to one another. The first side section 26B extends perpendicularly from a first end of the lower section 26A, and the second side section 26C extends perpendicularly from a second end of the lower section 26A that is opposite the first end. The lower and side sections 26A, 26B, 26C collectively form the cradle 26. The sections 26A, 26B, 26C also define an interior volume to at least partially surround the portable electronic device 14 on three of the four edges of the electronic device 14. For example, the portable electronic device 14 is surrounded completely on the lower edge and is at least partially surrounded on the side edges.

As shown in Fig. 1, the cradle 26 further includes a rear wall 26D that spans the distance between the lower and side sections 26A, 26B, 26C at a location behind the channels 28A-28C. The rear wall 26D provides a backrest for the portable electronic device 14 to further support the portable electronic device 14. The cradle 26 also includes a pad 32 coupled to the rear wall 26D. The pad 32 defines a plane that is parallel to a back surface of the portable electronic device 14. The pad 32 extends over at least part of the rear wall 26D to cover at least part of the rear wall 26D. In some embodiments, the pad 32 may extend over the entire rear wall 26D. The pad 32 also extends partially into the channels 28A, 28B, 28C. In some embodiments, the pad 32 may extend along the length of one or more of the channels 28A, 28B, 28C. The pad 32 is made of a relatively soft material, such as an elastomeric material, rubber, or foam, to inhibit marring the portable electronic device 14 as the device 14 is slid into and out of the cradle 26. In some embodiments, the pad 32 may be made of thermoplastic polyurethane (TPU). The pad 32 also increases friction between the cradle 26 and the portable electronic device 14 to inhibit the device 14 from unintentionally sliding out of the cradle 26.

With reference to Fig. 3, the pad 32 includes one or more protrusions 34. In the illustrated embodiment, the pad 32 includes four protrusions 34, or bumpers. The illustrated protrusions 34 are positioned adjacent corners of the pad 32. In other embodiments, the protrusions 34 may be located elsewhere on the pad 32, and/or the pad 32 may include fewer or more protrusions. The protrusions 34 protrude or extend outwardly from the pad 32 toward the portable electronic device 14. The protrusions 34 are configured to deflect into the pad 32, as further explained below. For example, a space in the pad 32 behind each protrusion 34 may be at least partially empty such that the protrusions 34 can deflect inwardly. In the illustrated embodiment, the protrusions 34 are integrally formed as a single piece with the rest of the pad 32 and made of the same material. In other embodiments, the protrusions 34 may be made of a different material than the pad 32 and/or may be separate elements that are coupled to the pad 32.

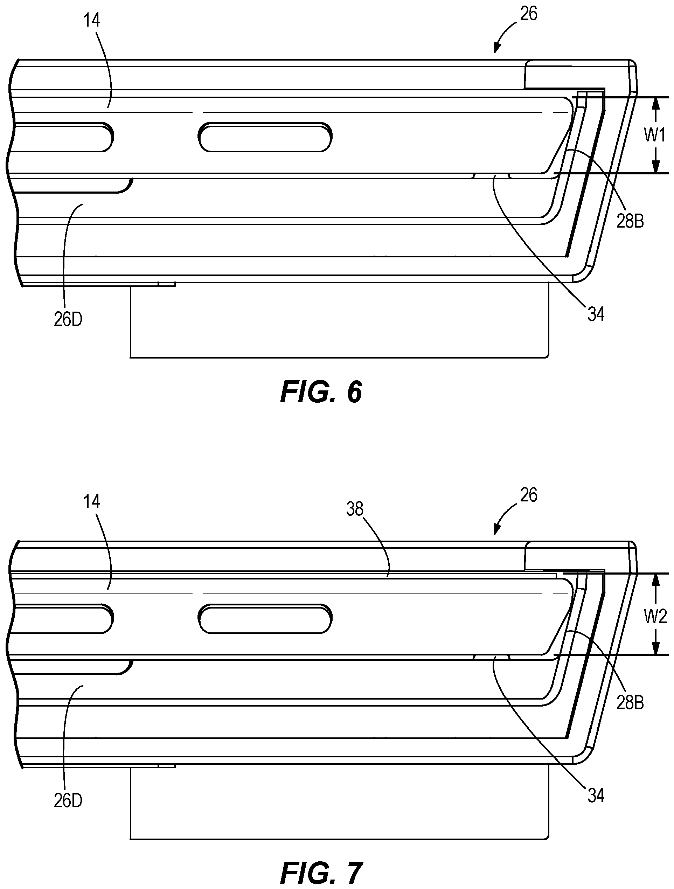

The protrusions 34 are operable to provide additional support for the portable electronic device 14 when the device 14 is positioned within the cradle 26. In particular, the protrusions 34 are designed to take up extra space in the cradle 26 so the cradle 26 can snugly receive devices having different thicknesses. In some scenarios, the portable electronic device 14 may or may not include an external screen, such as a privacy screen or screen protector. When the portable electronic device 14 does not include an external screen (as shown in Fig. 6), the device 14 has a first thickness W1. As such, the protrusions 34 help to provide a snug fit (e.g., eliminate a gap or space) for the device 14 within the channels 28A-28C. Alternatively, when the portable electronic device 14 includes an external screen 38 (as shown in Fig. 7), the device 14 has a second thickness W2. The second thickness W2 is larger than the first thickness W1. As such, the protrusions 34 will deflect into the pad 32 to make space for the device 14.

With continued reference to Figs. 1 and 3, the pad 32 additionally includes a cutout 42. In the illustrated embodiment, the cutout 42 is formed completely through the pad 32 to expose the rear wall 26D. In other embodiments, the cutout 42 may be a recessed area formed in the pad 32. The illustrated cutout 42 is a single cutout located in central area of the pad 32. In other embodiments, the cutout 42 may be located elsewhere in the pad 32, and/or the pad 32 may include multiple discrete or connected cutouts 42. The cutout 42 provides a cooling channel for the portable electronic device 14 received in the cradle 26. More particularly, the cutout 42 provides a space between the portable electronic device 14 and the rear wall 25D to help dissipate heat generated by the device 14 out of and away from the cradle 26.

The dock 18 is configured to transition between a range of positions. The base 22 includes a hinge 54 coupled to a first boss 46 and a second boss 50 of the cradle 26. The first boss 46 and the second boss 50 receive a first end 54A and a second end 54B of the hinge 54, respectively. In some embodiments, the hinge 54 may be a friction hinge or other type of self-sustaining hinge. The hinge 54 allows the cradle 26 to rotate about a hinge axis A relative to the base 22. The hinge axis A extends in a direction parallel to the lower surface 22A of the base 22.

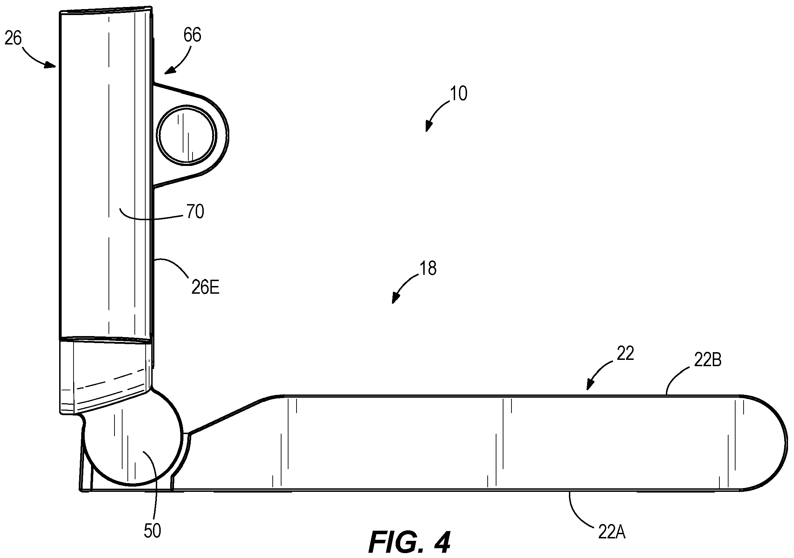

The cradle 26 is rotatable relative to the base 22 about the hinge axis A to a plurality of positions. As shown in Figs. 4-5B, the cradle 26 is movable between a first, upright position (Fig. 4) and a second, reclined position (Fig. 5B). The cradle 26 is also movable to multiple intermediate positions between the upright position and the reclined position. In the illustrated embodiment, the cradle 26 is movable relative to the base 22 through an angle of about 65 degrees. For example, when the cradle 26 is in the upright position, the cradle 26 is oriented at a first angle A1 relative to the base 22 (Fig. 5A). In the illustrated embodiment, the first angle A1 is approximately 90 degrees, although the first angle A1 may be other suitable angles. In this position, the portable electronic device 14 received in the cradle 26 is more suitable for viewing. When the cradle 26 is in the reclined position, the cradle 26 is oriented a second angle A2 relative to the base 22 (Fig. 5B). The second angle A2 is smaller than the first angle A1. In the illustrated embodiment, the second angle A2 is approximately 25 degrees, although the second angle A2 may be other suitable angles. In this position, the portable electronic device 14 received in the cradle 26 is more suitable for drawing, writing, and/or typing on. When in one of intermediate positions between the upright position and the reclined position, the cradle 26 is oriented at any angle within a range of 25 degrees to 90 degrees relative to the base 22.

As shown in Fig. 2, the dock 18 may include one or more feet 64 coupled to a backside of the cradle 26. In the illustrated embodiment, the dock 18 includes two spaced apart feet 64. In other embodiments, the dock 18 may include fewer or more feet 64, such as a single foot 64. When the cradle 26 is in the reclined position (Figs. 5A and 5B), the feet 64 may contact the upper surface 22B of the base 22. The feet 64 help support and stabilize the cradle 26 relative to the base 22. For example, the feet 64 inhibit the cradle 26 from moving beyond the reclined position when a user applies pressure to the portable electronic device 14 during drawing, writing, and/or typing. In some embodiments, portions of the feet 64 may be covered with a relatively soft material (e.g., an elastomer material, rubber, or foam) to inhibit marring of the base 22.

The system 10 may be useful for direct interaction with the portable electronic device 14 when in the upright position (Fig. 5A) or in the reclined position (Fig. 5B). Specifically, for writing activities, an ideal position of the system 10 includes the cradle 26 positioned approximately 25 degrees relative to the base 22 (e.g., the reclined position). Alternatively, for reading activities, an ideal position of the system 10 includes the cradle 26 positioned within a range of approximately 25 to 90 degrees relative to the base 22 (e.g., the upright position or one of the intermediate positions).

In any of the positions (the upright position, the intermediate positions, and the reclined position), a user may use a stylus or other input device (e.g., finger) directly on the surface (e.g., screen) of the portable electronic device 14. Alternatively, in any of the positions, the system 10 may be used as a desktop application (e.g., for use with discrete peripherals such as a keyboard and a mouse). To transition between the different positions, the cradle 26 is rotated about the axis A, thereby rotating the electronic device 14, until a desirable position is reached.

With continued reference to Figs. 5A and 5B, the dock 18 is operable to hold the portable electronic device 14 in any position within the range of motion of the cradle 26. As noted above, the hinge 46 may be a friction hinge that holds the cradle 26 at any orientation within the range, requiring a force greater than the cantilevered weight of the portable electronic device 14 in the cradle 26 to move from one position to another. In some embodiments, the hinge 46 may include a securing mechanism to secure the cradle 26 in one or more of the positions. The securing mechanism may include, for example, a passive detent mechanism that can be manually overcome with force or an active latch mechanism that requires a user to operate a separate actuator to unlatch. The securing mechanism may be operable to hold the cradle 26 in the reclined position, in the upright position, or in both positions. Additionally, the lock mechanism may be operable to hold the cradle 26 in one or more of the intermediate positions.

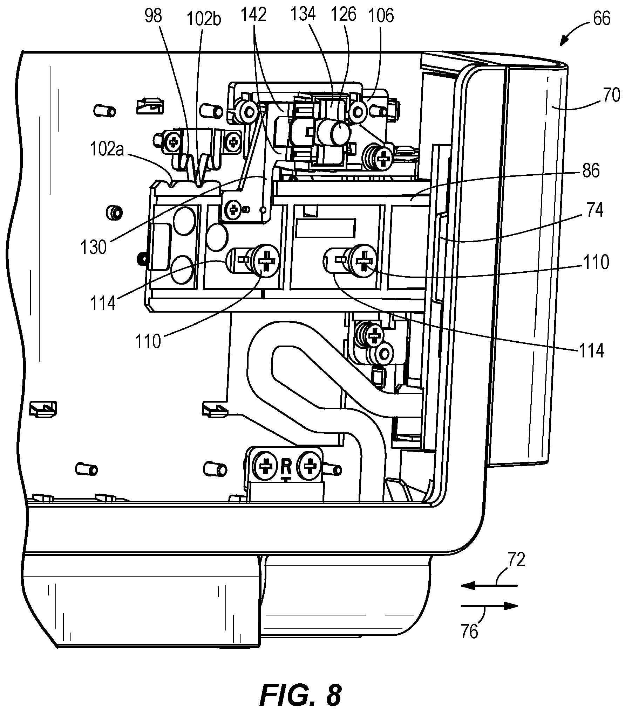

As shown in Figs. 1-3, the dock 18 includes a security apparatus 66 mounted to the cradle 26. In the illustrated embodiment, the security apparatus 66 is mounted to the second side section 26C of the cradle 26. In other embodiments, the security apparatus 66 may be mounted elsewhere on the cradle 26, such as the lower section 26A, the first side section 26A, or the rear wall 26D. The illustrated security apparatus 66 includes a security apparatus housing 70, a lock head 74 (Fig. 8), and a locking mechanism 78. The housing 70, or actuator, is mounted to the cradle 26 and is movable (e.g., slidable, rotatable, etc.) relative to the cradle 26 between an engaged position (Figs. 1 and 3) and a disengaged position. In the illustrated embodiment, the housing 70 is movable in a first direction 72 (e.g., toward the cradle 26) and in a second direction 76 (e.g., away from the cradle 26) (Fig. 3). The lock head 74 is coupled to the housing 70 and includes an electrical connector. The lock head 74 is configured to be inserted into a port of the portable electronic device 14 received in the cradle 26 such that the electrical connector may be connected to the portable electronic device 14 for transmitting data, power, or both data and power between the electronic device 14 and the ports 30. In other embodiments, the lock head 74 may be an alternative type of security anchor.

In the disengaged position, the security apparatus housing 70 and the lock head 74 are spaced away from the channels 28A-28C of the cradle 26 such that the portable electronic device 14 is insertable into and removable from the channels 28A-28C of the cradle 26 without interference from the security apparatus 66. In this position, the security apparatus housing 70 and the lock head 74 remain connected to, or supported by, the cradle 26. After the portable electronic device 14 is inserted into the cradle 26, the housing 70 and the lock head 74 are moved (e.g., automatically via a motor or spring, manually by pressing the housing 70, etc.) toward the channels 28A-28C to the engaged position (Figs. 1 and 3) to engage the lock head 74 with the electronic device 14. Moving the lock head 74 to the engaged position includes inserting the electrical connector into a mating electrical connector port on the portable electronic device 14. As noted above, the electrical connector is connected to the ports 30 (Fig. 4) of the dock 18 via electrical wiring. When the lock head 74 is moved to the engaged position, the electrical connector thereby connects the portable electronic device 14 to the ports 30.

As shown in Figs. 8-9, the locking mechanism 78 is mounted to a rear section of the cradle 26 adjacent to the housing 70. The locking mechanism 78 includes a lock cylinder 82 that is rotatable between a first position and a second position. The first position corresponds to an unlocked position (Figs. 8-9) in which the housing 70 and the lock head 74 are free to move between the engaged and disengaged positions. The second position corresponds to a locked position in which the housing 70 and the lock head 74 are locked in the engaged position. The lock cylinder 82, and more specifically a cam lobe 82a of the lock cylinder 82, engages with a plate 86 of the housing 70 when the cylinder 82 is in the second position to block movement of the housing 70 from the engaged position. The cam lobe 82a further rests against a portion 78a of the locking mechanism 78 when the locking mechanism 78 is in the first position. The portion 78a of the locking mechanism 78 functions as a guide along which the locking mechanism 78 rotates between the first and second positions. A set screw 90 retains the lobe 82a in place and further limits rotation of the lobe 82a.

In some embodiments, the lock cylinder 82 may be manually actuated between the first position and the second position by, for example, a key. In other embodiments, the lock cylinder 82 may be automatically moved between the first position and the second position by a powered actuator, such as a motor, a solenoid, and the like. In such embodiments, an authorized user may input a security code (e.g., a passcode, a biometric, etc.) into the dock 18 to automatically move the lock cylinder 82. In further embodiments, the lock cylinder 82 may be moved between the first position and the second position by a combination of mechanical and electrical features. For example, an authorized user may input a security code into the dock 18, and then actuate a manual actuator (e.g., button, dial, switch, etc.) to physically rotate the lock cylinder 82.

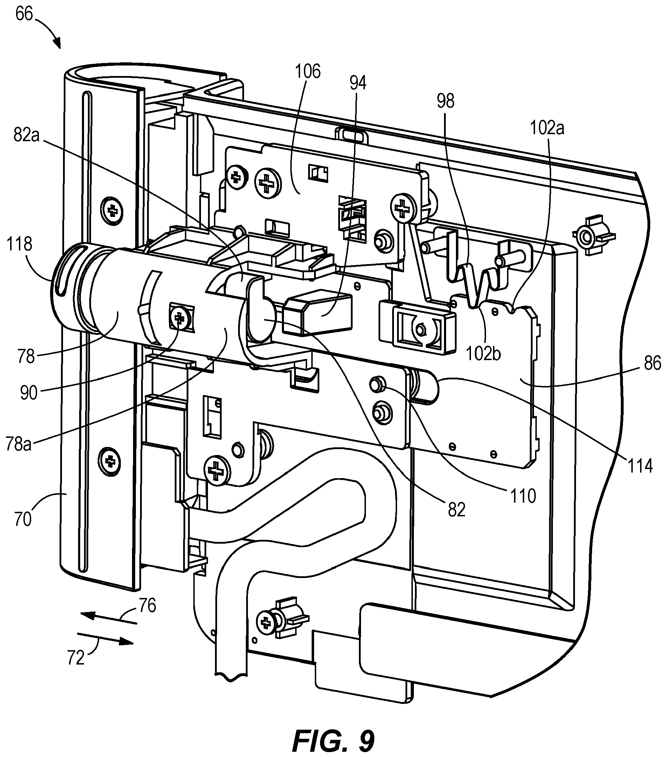

When in the second position, the cam lobe 82a of the lock cylinder 82 abuts against a protrusion 94 (Fig. 9) of the plate 86 to inhibit movement of the plate 86 (and the housing 70) relative to the cradle 26 in the second direction 76. The locking mechanism 78 additionally includes a biasing member 98 positioned against the plate 86. When in the first position, the biasing member 98 engages a first notch 102a on the plate 86, and when in the second position, the biasing member 98 engages a second notch 102b on the plate 86. As such, the biasing member 98 assists in maintaining the position of the plate 86 in either or both positions.

With continued reference to Figs. 8-9, a bracket 106 is positioned within the cradle 26 and is attached to the locking mechanism 78. The bracket 106 assists in locating and providing a smooth guide for the plate 86. As shown in Fig. 8, fasteners 110 hold the bracket 106 to the plate 86 and permit the plate 86 to translates relative to the bracket 106 within two slots 114. The bracket 106 is fixed relative to the cradle 26. The plate 86 is slidable relative to the bracket 106 (as limited by the slot 114 and the bracket 106) such that the housing 70 of the security apparatus 66 is slidable between the engaged and disengaged positions.

To remove the portable electronic device 14 from the dock 18, the locking mechanism 78 is unlocked. Once unlocked, the user is operable to manually disengage the lock head 74 from the portable electronic device 14 by moving the housing 70 and lock head 74 away from the cradle 26. As shown in Fig. 9, the locking mechanism 78 includes a removable lock 118 with a rotatable post, which in turn rotates the cam 82 between the first position and the second position. The removable lock 118 is removable from the remainder of the locking mechanism 78.

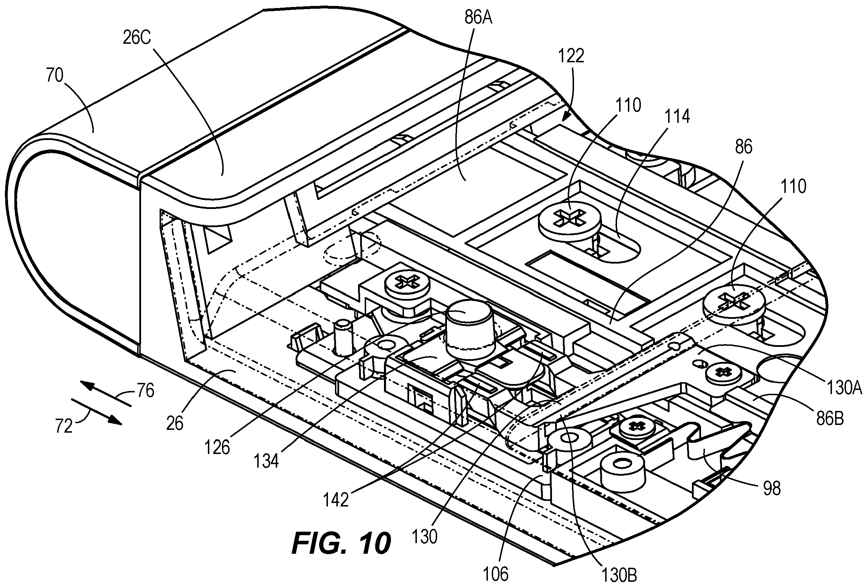

As shown in Figs. 10-11, the system 10 additionally includes a detect mechanism 122. The detect mechanism 122 is operably coupled to the locking mechanism 78 for movement with the locking mechanism 78. The illustrated detect mechanism 78 includes a pin 126, a connector 130 positioned adjacent to the pin 126, and the plate 86, which is coupled to the housing 70 of the security apparatus 66. The pin 126 is substantially cylindrical and includes a rectangular base 134. A biasing member (e.g., a spring) biases the pin 126 upwards (as viewed in Fig. 10) such that the pin 126 protrudes through an aperture 138 of the pad 32. More particularly, the pin 126 extends beyond the plane defined by the pad 32. If a user slides the portable electronic device 14 into the channels 28A-28C when the pin 126 extends beyond the pad 32, an edge of the portable electronic device 14 contacts the pin 126, thereby inhibiting further insertion of the device 14 into the cradle 26. This arrangement stops the portable electronic device 14 from being inserted into the cradle 26 while the lock head 74 extends into the cradle 26. The detect mechanism 122 thereby reduces the possibility of unintentionally damaging the lock head 74 and/or the portable electronic device 14 by inserting the portable electronic device 14 into the cradle 26 when the security apparatus 66 is not in the disengaged position.

The connector 130 is an elongate, rectangular rod including a first end 130A coupled to the plate 86, and a second end 130B engageable with the pin base 134. The second end 130B includes two ramped, parallel arms 142 which extend substantially perpendicular to the connector 130. The arms 142 are shaped and sized to engage the pin base 126 during operation of the locking mechanism 78.

The plate 86 is substantially rectangular and includes a first end 86A coupled to the housing 70 of the security apparatus 66, and a second end 86B. As described above, the plate 86 includes the two elongate slots 114 and is secured to the cradle 26 via fasteners 110 positioned within the slots 114. The plate 86 is permitted to axially move along the slots 114 in the first direction 72 and the second direction 76 until the fasteners 110 abut against an end of the slots 114, thereby inhibiting further movement.

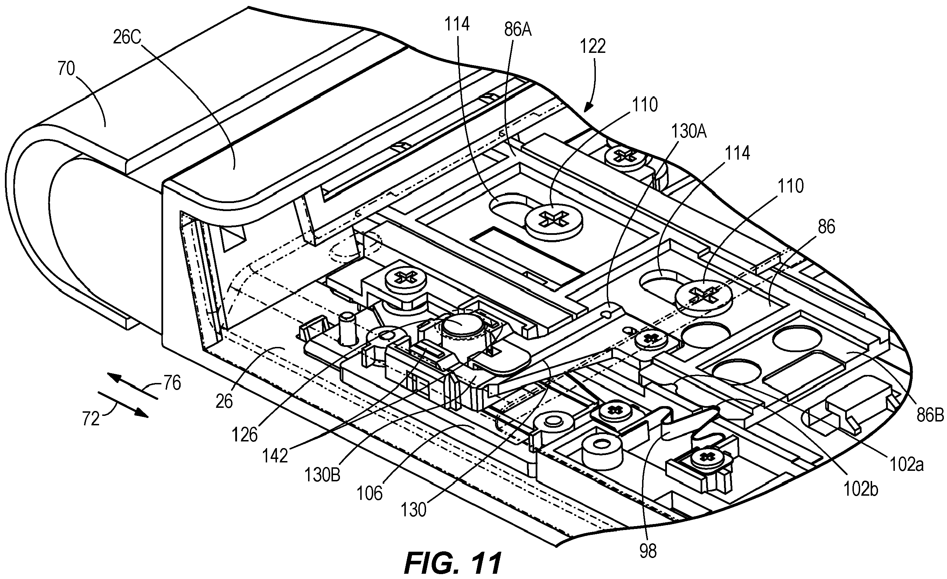

When the housing 70 of the security apparatus 66 is moved to the disengaged position, the plate 86 moves in the second direction 76. Because the first end 130A of the connector 130 is coupled to the plate 86, the connector 130 moves in the second direction 76 with the plate 86. During such movement, the arms 142 of the connector 130 engage the pin base 134, thereby pushing the pin 126 downward (as viewed in Fig. 11) against the bias of the biasing member. The pin 126 retracts downward, through the apertures 138 and into the pad 32. More particularly, the pin 126 retracts to a position flush with or beneath the plane defined by the pad 32. In this position, the portable electronic device 14 can be inserted into the cradle 26 without interference from the detect mechanism 122 and, specifically, the pin 126.

When the housing 70 of the security apparatus 66 is moved to the engaged position, the plate 86 axially moves in the first direction 72, subsequently causing the connector 130 to axially move in the first direction 72. During such movement, the arms 142 of the connector 130 disengage the pin base 134. Therefore, the biasing member can bias the pin 126 upwards, causing the pin 126 to protrude through the aperture 138 of the pad 32. If the portable electronic device 14 is received in the cradle 26, the pin 126 will move upward until the pin contacts 126 the rear surface of the device 14.

When the security apparatus 66 is in the disengaged position (e.g., when the cam 82 is in the first position), a user may slide the portable electronic device 14 into the channels 28A-28C of the cradle 26 without interference from the pin 126. As discussed above, after the portable electronic device 14 is fully inserted into the cradle 26, the housing 70 and lock head 74 are moved toward the channels 28A-28C to the engaged position to engage the lock head 74 with the portable electronic device 14.

Alternatively, if the user attempts to slide the portable electronic device 14 into the channels 28A-28C of the cradle 26 when the security apparatus 66 is in the engaged position (e.g., when the cam 82 is in the second position), the portable electronic device 14 will abut against the pin 126 and inhibit further movement of the portable electronic device 14 into the cradle 26. As such, the pin 126 stops the portable electronic device 14 from contacting (e.g., jamming against) and damaging the lock head 74 when the lock head 74 protrudes through the channels 28A-28C.

Although the invention has been described in detail with reference to certain preferred embodiments, variations and modifications exist within the scope and spirit of one or more independent aspects of the invention as described.

When used in this specification and the claims, the term "comprises" and "comprising" and variations thereof mean that specified features, steps or integers and included. The terms are not to be interpreted to exclude the presence of other features, steps or compounds.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilized for realising the invention in diverse forms thereof.

### PREFERRED FEATURES OF THE INVENTION

1. A dock for a portable electronic device, the dock comprising:
   a base;
   a cradle coupled to the base and defining an interior volume configured to receive the portable electronic device;
   a security apparatus configured to move between a first position where the security apparatus is configured to couple to the portable electronic device, and a second position where the security apparatus is configured to disengage the portable electronic device; and
   a detect mechanism coupled to the security apparatus for movement relative to the cradle, the detect mechanism configured to block insertion of the portable electronic device into the cradle when the security apparatus is in the first position.
2. The dock of clause 1, wherein the detect mechanism includes a pin, and wherein when the security apparatus is in the first position, the pin is configured to protrude though a portion of the cradle to block insertion of the portable electronic device into the cradle.
3. The dock of clause 2, wherein the detect mechanism includes a connector positioned adjacent to the pin, and a plate coupled to the security apparatus.
4. The dock of clause 3, wherein the connector is configured to engage the pin when the security apparatus is in the second position, and wherein the connector is configured to disengage the pin when the security apparatus is in the first position.
5. The dock of clause 2, wherein the pin further includes a biasing member configured to bias the pin outward through the portion of the cradle.
6. The dock of clause 1, further comprising a pad positioned within the cradle, wherein the detect mechanism is configured to protrude through the pad when the security apparatus is in the first position.
7. The dock of clause 6, wherein the detect mechanism is configured to retract into the pad when the security apparatus is in the second position.
8. The dock of clause 1, wherein the security apparatus further includes a locking mechanism operable to lock the security apparatus in the first position.
9. The dock of clause 1, wherein the base supports one or more electrical ports.
10. The dock of clause 9, wherein the security apparatus further includes a lock head having an electronical connector operable to electrically connect the portable electronic device to the one or more electrical ports.
11. A dock for a portable electronic device, the dock comprising:
   a base;
   a cradle coupled to the base and defining an interior volume configured to receive the portable electronic device; and
   a pad positioned within the cradle, wherein the pad includes one or more protrusions extending therefrom, the one or more protrusions configured to selectively deflect into the pad for portable electronic devices of different thicknesses.
12. The dock of clause 11, wherein the one or more protrusions are integrally formed as a single piece with the pad.
13. The dock of clause 11, wherein the one or more protrusions includes four protrusions, and wherein each of the protrusions is positioned adjacent a corner of the pad.
14. The dock of clause 11, wherein the pad and the one or more protrusions are comprised of thermoplastic polyurethane.
15. The dock of clause 11, wherein the pad includes a cutout extending through a portion of the pad to expose a portion of the cradle.
16. The dock of clause 15, wherein the cutout defines a cooling channel between the portable electronic device and the cradle to dissipate heat generated by the portable electronic device away from the cradle.
17. The dock of clause 11, wherein further comprising a hinge positioned between the base and the cradle, wherein the hinge defines a longitudinal axis.
18. The dock of clause 17, wherein cradle is rotatable relative to the base about the longitudinal axis to a plurality of positions.
19. The dock of clause 18, wherein the cradle is rotatable between an upright position, a reclined position, and a plurality of intermediate positions between the upright position and the reclined position.
20. A dock for a portable electronic device, the dock comprising:
   a base;
   a cradle rotatably coupled to the base and defining an interior volume configured to receive the portable electronic device;
   a pad coupled to the cradle and including a plurality of protrusions extending therefrom, the plurality of protrusions configured to deflect into the pad for portable electronic devices of different thicknesses;
   a security apparatus configured to move between a first position where the security apparatus is configured to electrically couple to the portable electronic device, and a second position where the security apparatus is configured to disengage the portable electronic device; and
   a detect mechanism coupled to the security apparatus for movement relative to the cradle, the detect mechanism configured to extend through the pad to block insertion of the portable electronic device into the cradle when the security apparatus is in the first position.

## Claims

1. A dock for a portable electronic device, the dock comprising:
a base;
a cradle coupled to the base and defining an interior volume configured to receive the portable electronic device;
a security apparatus configured to move between a first position where the security apparatus is configured to couple to the portable electronic device, and a second position where the security apparatus is configured to disengage the portable electronic device; and
a detect mechanism coupled to the security apparatus for movement relative to the cradle, the detect mechanism configured to block insertion of the portable electronic device into the cradle when the security apparatus is in the first position.

2. The dock of claim 1, wherein the detect mechanism includes a pin, and wherein when the security apparatus is in the first position, the pin is configured to protrude though a portion of the cradle to block insertion of the portable electronic device into the cradle.

3. The dock of claim 2, wherein the detect mechanism includes a connector positioned adjacent to the pin, and a plate coupled to the security apparatus, and preferably wherein the connector is configured to engage the pin when the security apparatus is in the second position, and wherein the connector is configured to disengage the pin when the security apparatus is in the first position.

4. The dock of claim 2, wherein the pin further includes a biasing member configured to bias the pin outward through the portion of the cradle.

5. The dock of any preceding claim, further comprising a pad positioned within the cradle, wherein the detect mechanism is configured to protrude through the pad when the security apparatus is in the first position, and preferably wherein the detect mechanism is configured to retract into the pad when the security apparatus is in the second position.

6. The dock of any preceding claim, wherein the security apparatus further includes a locking mechanism operable to lock the security apparatus in the first position.

7. The dock of any preceding claim, wherein the base supports one or more electrical ports, and preferably wherein the security apparatus further includes a lock head having an electronical connector operable to electrically connect the portable electronic device to the one or more electrical ports.

8. A dock for a portable electronic device, the dock comprising:
a base;
a cradle coupled to the base and defining an interior volume configured to receive the portable electronic device; and
a pad positioned within the cradle, wherein the pad includes one or more protrusions extending therefrom, the one or more protrusions configured to selectively deflect into the pad for portable electronic devices of different thicknesses.

9. The dock of claim 8, wherein the one or more protrusions are integrally formed as a single piece with the pad.

10. The dock of claim 8, wherein the one or more protrusions includes four protrusions, and wherein each of the protrusions is positioned adjacent a corner of the pad.

11. The dock of any one of claims 8 to 10, wherein the pad and the one or more protrusions are comprised of thermoplastic polyurethane.

12. The dock of any one of claims 8 to 11, wherein the pad includes a cutout extending through a portion of the pad to expose a portion of the cradle, and preferably wherein the cutout defines a cooling channel between the portable electronic device and the cradle to dissipate heat generated by the portable electronic device away from the cradle.

13. The dock of any one of claim 8 to 12, further comprising a hinge positioned between the base and the cradle, wherein the hinge defines a longitudinal axis.

14. The dock of claim 13, wherein the cradle is rotatable relative to the base about the longitudinal axis to a plurality of positions, and preferably wherein the cradle is rotatable between an upright position, a reclined position, and a plurality of intermediate positions between the upright position and the reclined position.

15. The dock of claim 8, wherein the cradle is rotatably coupled to the base, and further comprising:
a security apparatus configured to move between a first position where the security apparatus is configured to electrically couple to the portable electronic device, and a second position where the security apparatus is configured to disengage the portable electronic device; and
a detect mechanism coupled to the security apparatus for movement relative to the cradle, the detect mechanism configured to extend through the pad to block insertion of the portable electronic device into the cradle when the security apparatus is in the first position.
